# EUROPÄISCHE PATENTSCHRIFT

(11) **EP 4 605 345 B1**
(45) Veröffentlichungstag und Bekanntmachung des Hinweises auf die Patenterteilung: **13.05.2026**
(21) Anmeldenummer: 23801299.1
(22) Anmeldetag: 18.10.2023
(51) Int. Cl.: C01C 1/04, B01J 8/04, C25B 1/04, F25J 3/04

(54) **VERFAHREN ZUM BETRIEB EINER AMMONIAKSYNTHESE IN TEILLAST SOWIE TEILLASTFÄHIGE AMMONIAKSYNTHESE**
PROCESS FOR OPERATING AN AMMONIA SYNTHESIS AT PARTIAL LOAD AND AMMONIA SYNTHESIS CAPABLE OF OPERATING AT PARTIAL LOAD
PROCÉDÉ DE CONDUITE D'UNE SYNTHÈSE D'AMMONIAC EN CHARGE PARTIELLE ET SYNTHÈSE D'AMMONIAC EN CHARGE PARTIELLE

(30) Priorität: 19.10.2022 EP 22020497
(43) Veröffentlichungstag der Anmeldung: 27.08.2025
(73) Patentinhaber: Linde GmbH, 82049 Pullach (DE); Technische Universität München, 80333 München (DE)
(72) Erfinder: REINKE, Michael, 82049 Pullach (DE); KLEIN, Harald, 80290 München (DE); SCHWARZHUBER, Josef, 82049 Pullach (DE); FAHR, Steffen, 80290 München (DE)
(74) Vertreter: Fischer, Werner
(86) Internationale Anmeldenummer: PCT/EP2023/025437
(87) Internationale Veröffentlichungsnummer: WO 2024/083352

(56) Entgegenhaltungen:
- EP-A1- 3 819 261
- WO-A1-2017/153304
- WO-A1-2021/060985
- US-A- 4 744 966

## Beschreibung

Die Erfindung betrifft ein Verfahren zur Synthese von Ammoniak, bei dem ein Wasserstoff und Stickstoff umfassendes Gasgemisch (Make-up-Gas) in einem ersten Betriebsmodus mit einem oberhalb eines Schwellwerts liegenden Mengenstrom und in einem zweiten Betriebsmodus mit einem unterhalb dieses Schwellwerts liegenden Mengenstrom bereitgestellt wird, um ein Ammoniaksynthesegas zu bilden, das in einem Ammoniakreaktor in wenigstens einem ersten und einem mit dem ersten verbundenen zweiten Katalysatorbett zu einem Ammoniak enthaltenden Syntheseprodukt umgesetzt wird, wobei in einer zwischen dem ersten und dem zweiten Katalysatorbett angeordneten Kühleinrichtung nicht umgesetztes Ammoniaksynthesegas als Kühlmittel eingesetzt wird, um die Temperatur eines im ersten Katalysatorbett teilumgesetzten Ammoniaksynthesegases vor seiner Weiterleitung in das zweite Katalysatorbett abzusenken, wobei die Temperatur des teilumgesetzten Ammoniaksynthesegases im zweiten Betriebsmodus umso stärker abgesenkt wird, je größer der Mengenstrom des bereitgestellten Make-up-Gases ist.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 80 und 300bar und einer Temperatur zwischen 300 und 450°C einem Ammoniakreaktor zugeführt, um mit katalytischer Unterstützung in einer exothermen Reaktion unter Bildung von Ammoniak umgesetzt zu werden. Aufgrund thermodynamischer Limitierungen erfolgt die Umsetzung allerdings nur unvollständig, so dass ein Syntheseprodukt entsteht, das neben Ammoniak auch erhebliche Wasserstoff- und Stickstoffanteile enthält. Mit einer Temperatur zwischen 400 und 450°C verlässt das Syntheseprodukt den Ammoniakreaktor und wird nachfolgend in einer Reihe von Wärmetauschern abgekühlt, um Ammoniak durch Kondensation abzuscheiden und ein weitgehend aus Wasserstoff und Stickstoff bestehendes, Reste nicht auskondensierten Ammoniaks enthaltendes Recyclegas zu erhalten, das zur Erhöhung der Ammoniakausbeute in einem Synthesekreislauf zum Ammoniakreaktor zurückgeführt und dabei mit einem Wasserstoff und Stickstoff umfassenden Make-up-Gas zum Ammoniaksynthesegas gemischt wird.

Üblicherweise sind Ammoniakreaktoren als adiabate Mehrbettrektoren ausgeführt, die wenigstens zwei strömungstechnisch miteinander verbundene Katalysatorbetten umfassen, die seriell von Ammoniaksynthesegas, das dabei schrittweise zum Syntheseprodukt umgesetzt wird, durchströmt werden können. Nach dem ersten und vor jedem weiteren Katalysatorbett ist jeweils eine Kühleinrichtung angeordnet, über die Reaktionswärme aus dem durch Umsetzung im vorgeschalteten Katalysatorbett erhaltenen Gasgemisch abgeführt wird, um es abgekühlt zur weiteren Umsetzung in das nachgeschaltete Katalysatorbett weiterzuführen. Als Kühlmittel bei einer derartigen Zwischenkühlung dient anzuwärmendes nicht umgesetztes Ammoniaksynthesegas. Je nachdem, ob die Wärme dabei direkt oder indirekt auf das Ammoniaksynthesegas übertragbar ist, spricht man in Fachkreisen von Adiabatic-Quench-Cooling- oder AQC-Reaktoren bzw. Adiabatic-Indirect-Cooling- oder AIC-Reaktoren.

Der für die Bildung des Make-up-Gases benötigte Wasserstoff wird heute noch überwiegend aus Kohlenwasserstoffen gewonnen, die hierbei unter Entstehung von Kohlendioxid zu einem wasserstoffreichen Synthesegas reformiert werden. Das klimaschädliche Kohlendioxid wird abgetrennt und entweder in die Atmosphäre freigesetzt oder mit großem finanziellem und apparativem Aufwand durch Sequestrierung entsorgt.

Um diese Nachteile zu überwinden, werden in letzter Zeit verstärkt Anstrengungen unternommen, Wasserstoff kohlendioxidfrei beispielsweise durch elektrochemische Zerlegung von Wasser unter Verwendung eines Elektrolyseurs zu gewinnen und zur Bildung des Make-up-Gases einzusetzen. Der insgesamt für die Ammoniakerzeugung benötigte Strom wird dabei direkt aus regenerativen Quellen wie Wind- oder Solarkraftwerken, oder als Überschussstrom aus dem öffentlichen Netz bezogen, weshalb er nicht mit konstanter Leistung zur Verfügung steht. Da sich der Betrieb des Elektrolyseurs und eines evtl. zur Stickstofferzeugung eingesetzten Luftzerlegers relativ einfach und schnell an schwankende Bedingungen anpassen lässt und die Produktionsmengen von Wasserstoff und Stickstoff in erster Näherung proportional zur elektrischen Leistung sind, variieren die Mengenströme des im Elektrolyseur produzierten Wasserstoffs und des im Luftzerleger erzeugten Stickstoffs mit der Menge des verfügbaren elektrischen Stroms. Entsprechend erreichen die Mengenströme des Make-up- und des Ammoniaksynthesegases häufig und über längere Zeiträume weniger als die Hälfte der Werte, die für einen Vollastbetrieb der Ammoniaksynthese erforderlich sind.

Im Gegensatz zum Elektrolyseur und zu einem ggf. zur Stickstoffgewinnung eingesetzten Luftzerleger, können der Ammoniakreaktor sowie der Synthesekreislauf nur sehr langsam und begrenzt an schwankende Betriebsbedingungen angepasst werden. Eine Reduzierung der zugeführten Menge an Make-up-Gas führt zu einer Reduzierung der sich im Synthesekreislauf befindlichen Materialmenge bzw. des im Synthesekreislauf umlaufenden Materialstroms. Dies wiederum resultiert in einem verminderten Druck im Ammoniakreaktor und dem Synthesekreislauf. Eine übermäßige und häufige Druckabsenkung führt zu mechanischen Beanspruchungen des Reaktors sowie der mit ihm verbundenen Anlagenteile, wofür diese nur mit hohen Investitionen ausgeführt werden können. Unterschreitet die zuführbare Menge an Ammoniaksynthesegas einen Mindestwert, der gewöhnlich bei 30% des Wertes bei Volllast liegt, muss die Produktion unterbrochen und der Ammoniakreaktor abgeschaltet werden.

Um das Abschalten des Ammoniakreaktors zu vermeiden, schlägt beispielsweise die Patentanmeldung WO2012/037571A2 vor, in Stromüberschusszeiten, in denen der Elektrolyseur mehr Wasserstoff und der Luftzerleger mehr Stickstoff produziert, als im Ammoniakreaktor verbraucht werden kann, Wasserstoff und Stickstoff in Puffertanks zu speichern und in Strommangelzeiten dazu einzusetzen, Make-up-Gas mit einem oberhalb des Mindestwertes liegenden Mengenstrom zu bilden. Um lang andauernde Strommangelzeiten überbrücken zu können, müssen die Puffertanks allerdings entsprechend groß und kostspielig ausgeführt werden.

Eine weitere Methode offenbart die EP3426601B1. Bei dieser wird ein AQC-Ammoniakreaktor mit wenigstens einem ersten und einem zweiten Katalysatorbett eingesetzt, in dem in Zeiten, in denen Make-up-Gas mit einem oberhalb eines Schwellwerts liegenden Mengenstrom bereitgestellt wird, ein erster Teilstrom des zur Verfügung stehenden Ammoniaksynthesegases dem ersten Katalysatorbett und das Gasgemisch, dass das erste Katalysatorbett verlässt, nach direkter Zwischenkühlung, bei der ein zweiter Teilstrom des zur Verfügung stehenden Ammoniaksynthesegases (Quench-Volumenstrom) als Kühlmittel dient, dem zweiten Katalysatorbett zugeführt wird. Steht das Make-up-Gas mit einem unterhalb des Schwellwerts liegenden Mengenstrom bereit, wird das Verhältnis des ersten zum zweiten Teilstrom vergrößert, so dass der Volumenstrom im ersten Katalysatorbett unterproportional reduziert wird. Aufgrund des verringerten Quench-Volumenstroms sinkt der Umsatz im zweiten Katalysatorbett, so dass die Menge des Ammoniaksynthesegases weniger stark abnimmt als die des Make-up-Gases, wodurch sich ein höherer Druck im Ammoniakreaktor aufrechterhalten lässt. Zusätzlich wird durch die Maßnahme der Temperaturanstieg im ersten Katalysatorbett begrenzt. In nachgeschalteten Katalysatorbetten ist der Umsatz temperatur- und partialdruckbedingt geringer, so dass auch in diesen Zonen der Temperaturanstieg trotz geringerem Quench-Volumenstroms reduziert ist.

Wie eine Vergleichsstudie *(*Comparison between three types of ammonia synthesis reactor configurations in terms of cooling methods, Mohammad Hasan Khademi and Reyhaneh Sadat Sabbaghi, Chemical Engineering Research and Design, Volume 128, December 2017, Pages 306-317*),* bei der drei für die Ammoniaksynthese geeignete Reaktortypen untersucht wurden, ergab, sind AQC-Reaktoren am wenigsten für diese Aufgabe geeignet, da die in ihnen verwirklichte Kühlmethode die geringste Effizienz aufweist.

Die vorliegende Erfindung stellt sich daher die Aufgabe, ein Verfahren sowie eine Vorrichtung der gattungsgemäßen Art anzugeben, durch die es möglich ist, Ammoniak effizienter als im Stand der Technik zu erzeugen.

Die gestellte Aufgabe wird verfahrensseitig erfindungsgemäß dadurch gelöst, dass die Kühlung des im ersten Katalysatorbett teilumgesetzten Ammoniaksynthesegases in indirektem Wärmetausch gegen bereitgestelltes Ammoniaksynthesegas durchgeführt wird.

Das bereitgestellte Ammoniaksynthesegas kann im Ammoniakreaktor in mehr als zwei seriell durchströmten Katalysatorbetten zum Syntheseprodukt umgesetzt werden, wobei zwischen jeweils zwei unmittelbar benachbarten Katalysatorbetten eine Kühleinrichtung angeordnet ist, in der bereitgestelltes, nicht umgesetztes Ammoniaksynthesegas als Kühlmittel dient, um das in einem Katalysatorbett teilumgesetzte Ammoniaksynthesegas vor seiner Weiterleitung in das folgende Katalysatorbett in indirektem Wärmetausch abzukühlen. Vorzugsweise wird das bereitgestellte Ammoniaksynthesegas in drei seriell durchströmten Katalysatorbetten zum Syntheseprodukt umgesetzt, zwischen denen jeweils eine Kühleinrichtung angeordnet ist.

Um es mit einer Temperatur zwischen 300 und 450°C, vorzugsweise zwischen 330 und 430°C in das ersten Katalysatorbett einleiten zu können, wird im ersten Betriebsmodus zumindest ein Teil des dem Ammoniakreaktor zugeführten Ammoniaksynthesegases in der oder den Kühleinrichtungen als Kühlmittel eingesetzt und dabei ausschließlich gegen teilumgesetztes Ammoniaksynthesegas angewärmt. Falls die Anwärmung in zwei oder mehr Kühleinrichtungen erfolgt, wird dieser Teil des Ammoniaksynthesegases vorzugsweise seriell durch die Kühleinrichtungen geführt. Zur Einstellung der Leistung der Kühleinrichtung bzw. der Kühleinrichtungen und/oder der Temperatur, mit der das Ammoniaksynthesegas in das erste Katalysatorbett eintritt, wird ggf. ein zweiter Teil des Ammoniaksynthesegases im Bypass zu wenigstens einer Kühleinrichtung geführt und dem angewärmten ersten Teil zugemischt.

Zur Erreichung der variablen, von der Menge des bereitgestellten Make-up-Gases abhängigen Temperaturabsenkung des teilumgesetzten Ammoniaksynthesegases wird im zweiten Betriebsmodus die Leistung der Kühleinrichtung bzw. der Kühleinrichtungen gezielt verringert. Hierzu wird zumindest ein Teil des für die Umsetzung im Ammoniakreaktor bereitgestellte Ammoniaksynthesegases nicht als Kältemittel durch die zwischen den Katalysatorbetten zur Kühlung von teilumgesetztem Ammoniaksynthesegas angeordnete Kühleinrichtung bzw. Kühleinrichtungen geleitet, sondern im Bypass zu der bzw. den Kühleinrichtungen in das erste Katalysatorbett geführt. Abhängig von der Menge des Make-up-Gases wird das Mengenverhältnis des Kühlmittelstroms zum Bypassstrom verändert, wobei dieses Verhältnis umso kleiner ist und die Kühlleistung sich folglich umso stärker verringert, je weniger Make-up-Gas bereitgestellt wird. Durch die verminderte Kühlleistung stellt sich ein verminderter Ammoniakanteil am Ausgang des Ammoniakreaktors ein, wodurch auch bei stark verminderter Menge an zugeführtem Make-up-Gas der Ammoniakreaktor bei einem Druck betrieben werden kann, der über einem vorgegebenen Mindestdruck liegt.

Um zu gewährleisten, dass das Ammoniaksynthesegas mit einer ausreichend hohen Temperatur in das erste Katalysatorbett eingeleitet werden kann, wird vorgeschlagen, zumindest die im Bypass zu führende Menge des Ammoniaksynthesegases gegen das Syntheseprodukt anzuwärmen, wozu sie vorzugsweise durch einen stromabwärts des letzten Katalysatorbetts angeordneten Wärmetauscher geführt wird, um indirekt Wärme mit dem Syntheseprodukt auszutauschen. Möglich ist auch eine Anwärmung des gesamten Ammoniaksynthesegases gegen das Syntheseprodukt, ehe der für die Bypassführung bestimmte Teil abgetrennt wird.

Vorzugsweise wird das Syntheseprodukt, das neben Ammoniak auch erhebliche Wasserstoff- und Stickstoffanteile umfasst, heiß aus dem Ammoniakreaktor abgezogen und in mehreren Abkühlstufen abgekühlt, um Ammoniak auszukondensieren und ein zweiphasiges Stoffgemisch zu erzeugen, das in einem Abscheider in eine überwiegend aus Ammoniak bestehende Flüssig- und eine weitgehend aus Wasserstoff und Stickstoff bestehende, Reste nicht abgeschiedenen Ammoniaks enthaltende Gasphase getrennt wird. Zur Erhöhung der Ammoniakausbeute wird die Gasphase als Recyclegas zum Ammoniakreaktor zurückgeführt und dabei mit dem aus Wasserstoff und Stickstoff bestehenden Make-up-Gas zum Ammoniaksynthesegas gemischt. Falls der Ammoniakreaktor aufgrund eines Mangels an Make-up- in Teillast betrieben werden muss, und die oben beschriebene Maßnahmen nicht ausreichen, um eine übermäßige Absenkung des Reaktordrucks zu vermeiden, wird vorgeschlagen, einen Teilstrom des Syntheseprodukts stromaufwärts zumindest einer der mehreren Abkühlstufen abzutrennen und - bis auf unvermeidliche Leitungsverluste - ohne weitere Abkühlung in den Abscheider zu führen. Dadurch erhöht sich die Ammoniakkonzentration im Recyclegas und folglich auch im Ammoniaksynthesegas, was zu einem geringeren Umsatz und einem reduzierten Temperaturanstieg im ersten Katalysatorbett führt.

Mit besonderem Vorteil kann das erfindungsgemäße Verfahren angewendet werden, wenn für die Bereitstellung des Make-up-Gases benötigter Wasserstoff und/oder Stickstoff unter Einsatz von Strom erzeugt wird, der direkt aus regenerativen Quellen wie Wind- oder Solarkraftwerken, oder als Überschussstrom aus dem öffentlichen Netz bezogen wird.

Weiterhin betrifft die Erfindung eine Vorrichtung zur Synthese von Ammoniak, umfassend eine Einrichtung, mit der ein Make-up-Gas zur Bildung eines Ammoniaksynthesegases bereitgestellt werden kann, einen Ammoniakreaktor, in dem wenigstens ein erstes und ein mit dem ersten über eine Kühleinrichtung verbundenes zweites Katalysatorbett angeordnet sind, über die bereitgestelltes Ammoniaksynthesegas zu einem Ammoniak enthaltenden Syntheseprodukt umsetzbar ist, eine Zuführungseinrichtung, über die Ammoniaksynthesegas dem ersten Katalysatorbett als Einsatz sowie der Kühleinrichtung als Kühlmittel zugeführt werden kann, um die Temperatur des im ersten Katalysatorbett teilumgesetzten Ammoniaksynthesegases vor seiner Weiterleitung in das zweite Katalysatorbett abzusenken, sowie eine Regeleinrichtung, über die die Höhe der Temperaturabsenkung in Abhängigkeit von der bereitgestellten Menge an Make-up-Gas eingestellt werden kann.

Die gestellte Aufgabe wird vorrichtungsseitig erfindungsgemäß dadurch gelöst, dass die Kühleinrichtung als Wärmetauscher ausgeführt ist, in dem als Kühlmittel eingesetztes Ammoniaksynthesegas vor seinem Einsatz im ersten Katalysatorbett in indirektem Wärmetausch gegen teilumgesetztes Ammoniaksynthesegas angewärmt werden kann.

Vorzugsweise umfasst die erfindungsgemäße Vorrichtung einen AIC-Ammoniakreaktor, dem die oben angeführte Vergleichsstudie bescheinigt, für die Ammoniaksynthese deutlich besser geeignet zu sein als ein im Stand der Technik verwendeter AQC-Reaktor.

Der Ammoniakreaktor kann mit mehr als zwei, bevorzugt mit drei Katalysatorbetten ausgeführt sein, die jeweils über eine Kühleirichtung seriell miteinander verbunden sind.

Besonders bevorzugt umfasst die erfindungsgemäße Vorrichtung eine Leitung, über die zumindest ein Teil des bereitgestellten Ammoniaksynthesegases im Bypass zu der bzw. den zwischen den Katalysatorbetten angeordneten Kühleinrichtungen dem ersten Katalysatorbett zugeführt werden kann, wobei die Größe des Bypass-Stroms über die Regeleinrichtung einstellbar ist.

Zweckmäßigerweise ist stromabwärts des in Strömungsrichtung letzten Katalysatorbetts eine weitere Kühleinrichtung angeordnet, mit der zumindest der im Bypass geführte Teilstrom des bereitgestellten Ammoniaksynthesegases gegen das abzukühlende Syntheseprodukt in indirektem Wärmetausche angewärmt werden kann. Sinnvollerweise befindet sich diese Kühleinrichtung innerhalb des Mantels des Ammoniakreaktors, so dass externe heiße Gasleitungen vermieden werden und das in den Ammoniakreaktor eintretende Ammoniaksynthesegas den Mantel des Reaktors kühlen kann.

Die erfindungsgemäße Vorrichtung weiterbildend wird vorgeschlagen, stromabwärts des Ammoniakreaktors mehrere Kühleinrichtungen sowie einen Abscheider seriell anzuordnen, um Ammoniak aus dem neben Ammoniak auch erhebliche Wasserstoff- und Stickstoffanteile enthaltenden Syntheseprodukt auskondensieren, abzuscheiden und eine überwiegend aus Ammoniak bestehende Flüssig- und eine weitgehend aus Wasserstoff und Stickstoff bestehende, Reste nicht auskondensierten Ammoniaks enthaltende Gasphase erhalten zu können, wobei der Abscheider so mit dem Ammoniakreaktor verbunden ist, dass die Gasphase als Recyclegas zum Ammoniakreaktor zurückgeführt und dabei mit dem aus Wasserstoff und Stickstoff bestehenden Make-up-Gas zum Ammoniaksynthesegas mischbar ist. Die erfindungsgemäße Vorrichtung kann weiterhin eine Bypass-Leitung umfassen, über die bei einem Mangel an Make-up-Gas ein Teilstrom des Syntheseprodukts stromaufwärts zumindest einer der mehreren Kühleinrichtungen abgetrennt und ohne weitere Abkühlung in den Abscheider geführt werden kann.

In einer besonders bevorzugten Ausgestaltung der erfindungsgemäßen Vorrichtung ist die Einrichtung zur Bereitstellung des Make-up-Gases dazu eingerichtet, Wasserstoff und/oder Stickstoff unter Einsatz von Strom zu erzeugen, der direkt aus regenerativen Quellen wie Wind- oder Solarkraftwerken, oder als Überschussstrom aus dem öffentlichen Netz bezogen wird. Als Wasserstofferzeuger kann die Einrichtung beispielsweise einen Elektrolyseur aufweisen, mit dem Wasser elektrochemisch in Wasserstoff und Sauerstoff zerlegbar ist.

Die Erfindung ermöglicht den Betrieb einer Ammoniaksynthese bei sehr niedriger Teillast, so dass sie auch bei stark schwankender Ammoniaksynthesegasmenge ohne oder mit gegenüber dem Stand der Technik deutlich kleineren Zwischenspeichern für Wasserstoff und/oder Stickstoff ausgeführt werden kann.

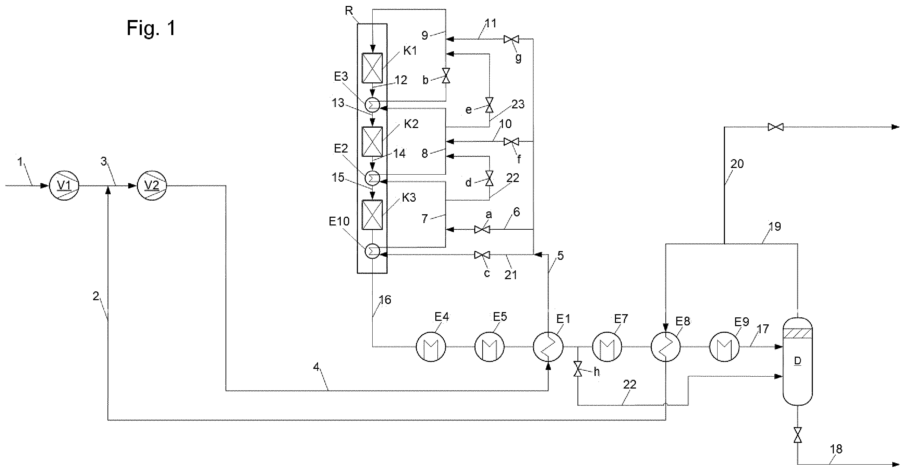

Im Folgenden soll die Erfindung anhand eines in der **Figur 1** schematisch dargestellten Ausführungsbeispiels näher erläutert werden.

Die Figur 1 zeigt eine Ammoniaksynthese, welche erfindungsgemäß mit geringer Teillast betreibbar ist.

Der Druck des aus Wasserstoff und Stickstoff bestehenden, in einer nicht dargestellten Einrichtung unter Nutzung von Strom aus regenerativen Quellen oder Überschussstrom mit schwankendem Mengenstrom erzeugten Make-up-Gases 1 wird im Verdichter V1 erhöht, ehe es mit dem wasserstoff- und stickstoffreichen Recyclegas 2 zum Ammoniaksynthesegas 3 zusammengeführt wird. Nach einer weiteren Druckerhöhung im Verdichter V2 wird das Ammoniaksynthesegas 4 im Wärmetauscher E1 gegen abzukühlendes Syntheseprodukt 16 vorgewärmt, so dass es mit einer Temperatur zwischen 100 und 250°C, vorzugsweise zwischen 140 und 200°C als vorgewärmtes Ammoniaksynthesegas 5 zur Einleitung in den als AIC-Reaktor ausgeführten Ammoniakreaktor R bereitsteht.

Liegt der Mengenstrom des Make-up-Gases 1 oberhalb eines Schwellwerts, wie insbesondere während des Vollastbetriebs, wird die Ammoniaksynthese in einem ersten Modus betrieben, wobei die Ventile a und b geöffnet und die Ventile c, d und e geschlossen sind. Zumindest der Großteil des unter Verwendung des Make-up-Gases 1 gebildeten Ammoniaksynthesegases 5 wird daher über die Leitungen 6, 7, 8 und 9 dem ersten Katalysatorbett K1 zugeführt und dabei in den Wärmetauschern E2 und E3 auf eine Temperatur von ca. 360°C angewärmt. Teile des Ammoniaksynthesegases 5 können über die Leitungen 10 und 11 sowie die Ventile f und g im Bypass zu den Wärmetauschern E2 und E3 geführt werden, um deren Kühlleistung und somit die Eintrittstemperatur in das erste Katalysatorbett K1 zu regeln. Ein Teil des im Ammoniaksynthesegas 9 enthaltenen Wasserstoffs und Stickstoffs wird in einer exothermen Reaktion im ersten Katalysatorbett K1 zu Ammoniak umgesetzt, so dass aus dem ersten Katalysator K1 ein erstes teilumgesetztes Ammoniaksynthesegas 12 mit erhöhter Temperatur austritt, das im Wärmetauscher E3 indirekt gegen nicht umgesetztes Ammoniaksynthesegas 8 abgekühlt wird. Aus dem abgekühlten ersten teilumgesetzten Ammoniaksynthesegas 13 wird im zweiten Katalysatorbett K2 ein zweites teilumgesetztes Ammoniaksynthesegas 14 mit erhöhter Temperatur erhalten, das im Wärmetauscher E2 indirekt gegen nicht umgesetztes Ammoniaksynthesegas 7 abgekühlt wird. Im dritten Katalysatorbett K3 wird aus dem abgekühlten zweiten teilumgesetzten Ammoniaksynthesegas 15 das Syntheseprodukt 16 erhalten, das in den Wärmetauschern E1 und E4 bis E9 schrittweise abgekühlt wird, wobei ein Großteil des enthaltenen Ammoniaks auskondensiert und ein zweiphasiges Stoffgemisch 17 entsteht. Im Abscheider D wird aus dem zweiphasigen Stoffgemisch 17 eine weitgehend aus Ammoniak bestehende Flüssigfraktion 18 sowie eine nicht auskondensiertes Ammoniak und nicht umgesetzten Wasserstoff und Stickstoff enthaltende Gasfraktion 19 gebildet, die nach einer evtl. Ausschleusung von Inerten (wie etwa Argon) über die Purgegasleitung 20 sowie der Anwärmung gegen abzukühlendes Syntheseprodukt 16 als Recyclegas 2 vor den Verdichter V2 zurückgeführt wird.

Steht das Make-up-Gas 1 lediglich mit einem unterhalb des Schwellwerts liegenden Mengenstrom bereit, wird die Anlage auf einen zweiten Betriebsmodus umgestellt. Hierzu werden die Ventile c, d und e geöffnet, so dass zumindest ein Teil 21 des vorgewärmten Ammoniaksynthesegases 5 über den Wärmetauscher E10 sowie die Leitungen 22 und 23 im Bypass zu den Wärmetauschern E2 und E3 geführt wird, ehe es über Leitung 9 in das erste Katalysatorbett K1 eintritt. Gleichzeitig wird weniger oder kein Ammoniaksynthesegas über die Wärmetauscher E2 und E3 geführt, deren Kühlleistungen sich daher gegenüber dem oben beschriebenen Betrieb der Anlage mit einem oberhalb es Schwellwerts liegenden Mengenstrom reduzieren. Die Temperaturen der teilumgesetzten Ammoniaksynthesegase 12 und 14 werden daher in den Wärmetauschern E2 und E3 weniger stark oder überhaupt nicht reduziert, so dass das erste teilumgesetzte Ammoniaksynthesegas 13 in das Katalysatorbett K2 und das zweite teilumgesetzte Ammoniaksynthesegas 15 in das Katalysatorbett K3 mit erhöhter Temperatur eintritt. Bedingt durch die erhöhten Eintrittstemperaturen, ist der Umsatz in diesen Katalysatorbetten geringer (im Extremfall findet kein Umsatz satt), so dass sich die Gastemperaturen hier trotz der geringeren Volumenströme nicht oder nur wenig erhöhen.

Vorzugsweise sind sämtliche Ventile a bis g als Regelventile ausgeführt, so dass die Verteilung des vorgewärmten Ammoniaksynthesegases 9 auf die Wärmetauscher E10, E2 und E3 je nach der zur Verfügung stehenden Menge des Make-up-Gases 1 über eine Regeleinrichtung (nicht dargestellt) eingestellt werden kann. Sinnvollerweise erfolgt die Einstellung zumindest im ersten Betriebsmodus so, dass der Umsatz insgesamt maximal ist und gleichzeitig die Temperatur in jedem der Katalysatorbetten K1 bis K3 einen vorgegebenen Grenzwert nicht überschreitet. Optional erfolgt die Einstellung im zweiten Betriebsmodus so, dass der Reaktionsumsatz minimal ist, und gleichzeitig die Temperatur in jedem der Katalysatorbetten K1 bis K3 einen vorgegebenen Grenzwert nicht unterschreitet. Im Extremfall werden die Ventile a, b, f und g geschlossen und kein Ammoniaksynthesegas als Kühlmittel über die Wärmetauscher E2 und E3 geleitet, wodurch die teilumgesetzten Gasströme 12 und 14 nicht gekühlt werden. Die Gesamtmenge des vorgewärmten Ammoniaksynthesegases 5 wird über den Wärmetauscher E10 geführt, wobei es in indirektem Wärmetausch mit dem Syntheseprodukt 16 die Temperatur erreicht, mit der es anschließend über die Leitung 9 in das Katalysatorbett K1 eintritt.

Um bei einem teilweisen oder völligen Verzicht auf die Zwischenkühlung in den Wärmetauschern E2 und E3 das Ammoniaksynthesegas 9 mit der erforderlichen Eintrittstemperatur in das Katalysatorbetts einleiten zu können, kann die Temperatur des in den Reaktor R eintretenden Ammoniaksynthesegasstroms 5 erhöht werden, indem beispielsweise ein Teil des heißen Syntheseproduktes im Bypass zu den beiden Wärmetauschern E4 und E5 oder zumindest zu einem der beiden geführt wird.

Falls die beschriebenen Maßnahmen nicht ausreichen, um den Druck im bzw. den Mengenstrom der Ammoniaksynthesegases durch den Ammoniakreaktor R über einem gewissen Schwellwert und gleichzeitig die die Temperatur des Ammoniakreaktors R unterhalb eines Grenzwerts zu halten, kann durch das Öffnen des Bypass Ventils h ein ammoniakreicher Strom 22 unter Umgehung der Wärmetauscher E7, E8 und E9 direkt in den Abscheider D geleitet werden. Dadurch erhöht sich der Ammoniakpartialdruck in der Gasfraktion 18 sowie im Ammoniaksynthesegas 9, wodurch sich der Umsatz und die Temperatur im Reaktor R verringern.

## Patentansprüche

1. Verfahren zur Synthese von Ammoniak (18), bei dem ein Wasserstoff und Stickstoff umfassendes Gasgemisch (Make-up-Gas) (1) in einem ersten Betriebsmodus mit einem oberhalb eines Schwellwerts liegenden Mengenstrom und in einem zweiten Betriebsmodus mit einem unterhalb dieses Schwellwerts liegenden Mengenstrom bereitgestellt wird, um ein Ammoniaksynthesegas (5) zu bilden, das in einem Ammoniakreaktor (R) in wenigstens einem ersten (K1) und einem mit dem ersten verbundenen zweiten Katalysatorbett (K2) zu einem Ammoniak enthaltenden Syntheseprodukt (16) umgesetzt wird, wobei in einer zwischen dem ersten (K1) und dem zweiten Katalysatorbett (K2) angeordneten Kühleinrichtung (E3) nicht umgesetztes Ammoniaksynthesegas (8) als Kühlmittel eingesetzt wird, um die Temperatur eines im ersten Katalysatorbett (K1) teilumgesetzten Ammoniaksynthesegases (12) vor seiner Weiterleitung in das zweite Katalysatorbett (K2) abzusenken, wobei die Temperatur des teilumgesetzten Ammoniaksynthesegases (12) im zweiten Betriebsmodus umso stärker abgesenkt wird, je größer der Mengenstrom des bereitgestellten Make-up-Gases (1) ist, **dadurch gekennzeichnet, dass** die Kühlung des im ersten Katalysatorbett (K1) teilumgesetzten Ammoniaksynthesegases (12) in indirektem Wärmetausch gegen bereitgestelltes Ammoniaksynthesegas (8) durchgeführt wird.

2. Verfahren nach Anspruch 1, **dadurch gekennzeichnet, dass** das bereitgestellte Ammoniaksynthesegas (5) im Ammoniakreaktor (R) in mehr als zwei seriell durchströmten Katalysatorbetten (K1, K2, K3) zum Syntheseprodukt (16) umgesetzt wird, wobei zwischen jeweils zwei unmittelbar benachbarten Katalysatorbetten eine Kühleinrichtung (E2, E3) angeordnet ist, in der bereitgestelltes Ammoniaksynthesegas (7, 8) als Kühlmittel dient, um das in einem Katalysatorbett teilumgesetzte Ammoniaksynthesegas (12, 14) vor seiner Weiterleitung in das folgende Katalysatorbett in indirektem Wärmetausch abzukühlen.

3. Verfahren nach einem der Ansprüche 1 oder 2, **dadurch gekennzeichnet, dass** zumindest ein Teil des bereitgestellten Ammoniaksynthesegases (5) im zweiten Betriebsmodus im Bypass (22, 23) zu der bzw. den Kühleinrichtungen (E2, E3) dem ersten Katalysatorbett (K1) zugeführt wird.

4. Verfahren nach Anspruch 3, **dadurch gekennzeichnet, dass** zumindest ein Teilstrom (21) des bereitgestellten Ammoniaksynthesegases (5) gegen das Syntheseprodukt (16) angewärmt (E10) wird.

5. Verfahren nach Anspruch 4, **dadurch gekennzeichnet, dass** in Abhängigkeit von der Menge des bereitgestellten Make-up-Gases (1) das Verhältnis des in der bzw. den Kühleinrichtungen (E2, E3) als Kühlmittel (7, 8) eingesetzten zu dem im Bypass (22, 23) zu der bzw. den Kühleinrichtungen (E2, E3) geführten Teil des bereitgestellten Ammoniaksynthesegases (5) verändert wird, wobei dieses Verhältnis umso kleiner ist, je weniger Make-up-Gas (1) bereitgestellt wird.

6. Verfahren nach einem der Ansprüche 1 bis 5, **dadurch gekennzeichnet, dass** das Syntheseprodukt (16) aus dem Ammoniakreaktor (R) abgezogen und in mehreren Abkühlstufen (E4, E5, E1, E7, E8, E9) abgekühlt wird, um Ammoniak auszukondensieren und ein zweiphasiges Stoffgemisch (17) zu erzeugen, das in einem Abscheider (D) in eine überwiegend aus Ammoniak bestehende Flüssigphase (18) und eine weitgehend aus Wasserstoff und Stickstoff bestehende, Reste nicht auskondensierten Ammoniaks enthaltende Gasphase (19) getrennt wird, wobei die Gasphase (19) als Recyclegas (2) zum Ammoniakreaktor (R) zurückgeführt und dabei mit dem aus Wasserstoff und Stickstoff bestehenden Make-up-Gas (1) zum Ammoniaksynthesegas (5) gemischt wird.

7. Verfahren nach Anspruch 6, **dadurch gekennzeichnet, dass** im zweiten Betriebsmodus ein Teilstrom (22) des Syntheseprodukts (16) stromaufwärts zumindest einer der mehreren Abkühlstufen (E4, E5, E1, E7, E8, E9) abgetrennt und ohne weitere Abkühlung in den Abscheider (D) geführt wird.

8. Verfahren nach einem der Ansprüche 1 bis 7, **dadurch gekennzeichnet, dass** für die Bereitstellung des Make-up-Gases (1) benötigter Wasserstoff und/oder Stickstoff unter Einsatz von Strom erzeugt wird, der direkt aus regenerativen Quellen wie Wind- oder Solarkraftwerken, oder als Überschussstrom aus dem öffentlichen Netz bezogen wird.

9. Vorrichtung zur Synthese von Ammoniak (18), umfassend eine Einrichtung, mit der ein Make-up-Gas (1) zur Bildung eines Ammoniaksynthesegases (5) bereitgestellt werden kann, einen Ammoniakreaktor (R), in dem wenigstens ein erstes Katalysatorbett (K1) und ein mit dem ersten über eine Kühleinrichtung (E3) verbundenes zweites Katalysatorbett (K2) angeordnet sind, über die bereitgestelltes Ammoniaksynthesegas (5) zu einem Ammoniak enthaltenden Syntheseprodukt (16) umsetzbar ist, eine Zuführungseinrichtung, über die Ammoniaksynthesegas (5) dem ersten Katalysatorbett (K1) als Einsatz (9) sowie der Kühleinrichtung (3) als Kühlmittel zugeführt werden kann, um die Temperatur des im ersten Katalysatorbett (K1) teilumgesetzten Ammoniaksynthesegases (12) vor seiner Weiterleitung in das zweite Katalysatorbett (K2) abzusenken, sowie eine Regeleinrichtung, über die die Höhe der Temperaturabsenkung in Abhängigkeit von der bereitgestellten Menge an Make-up-Gas (1) eingestellt werden kann, **dadurch gekennzeichnet, dass** die Kühleinrichtung (E3) als Wärmetauscher ausgeführt ist, in dem als Kühlmittel eingesetztes Ammoniaksynthesegas (8) vor seinem Einsatz im ersten Katalysatorbett (K1) in indirektem Wärmetausch gegen teilumgesetztes Ammoniaksynthesegas (12) angewärmt werden kann.

10. Vorrichtung nach Anspruch 9, **dadurch gekennzeichnet, dass** der Ammoniakreaktor (R) mit mehr als zwei, bevorzugt mit drei Katalysatorbetten (K1, K2, K3) ausgeführt ist, die jeweils über eine Kühleirichtung (E2, E3) seriell miteinander verbunden sind.

11. Vorrichtung nach einem der Ansprüche 9 oder 10, **dadurch gekennzeichnet, dass** sie eine Leitung (22, 23) aufweist, über die zumindest ein Teil des bereitgestellten Ammoniaksynthesegases (5) im Bypass zu der bzw. den zwischen den Katalysatorbetten (K1, K2, K3) angeordneten Kühleinrichtungen (E2, E3) dem ersten Katalysatorbett (K1) zugeführt werden kann, wobei die Größe des Bypass-Stroms über die Regeleinrichtung einstellbar ist.

12. Vorrichtung nach Anspruch 11, **dadurch gekennzeichnet, dass** stromabwärts des in Strömungsrichtung letzten Katalysatorbetts (K3) eine Kühleinrichtung (E10) angeordnet ist, mit der zumindest der im Bypass zu führende Teilstrom des bereitgestellten Ammoniaksynthesegases (5) gegen das abzukühlende Syntheseprodukt (16) in indirektem Wärmetausche angewärmt werden kann.

13. Vorrichtung nach Anspruch 12, **dadurch gekennzeichnet, dass** sich die stromabwärts des in Strömungsrichtung letzten Katalysatorbetts (K3) angeordnete Kühleinrichtung (E10) innerhalb des Mantels der Ammoniakreaktors (R) befindet.

14. Vorrichtung nach einem der Ansprüche 9 bis 13, **dadurch gekennzeichnet, dass** stromabwärts des Ammoniakreaktors (R) mehrere Kühleinrichtungen (E4, E5, E1, E7, E8, E9) sowie ein Abscheider (D) seriell angeordnet sind, über die Ammoniak aus dem neben Ammoniak auch Wasserstoff- und Stickstoffanteile enthaltenden Syntheseprodukt (16) auskondensiert und abgeschieden werden kann und eine überwiegend aus Ammoniak bestehende Flüssigphase (18) und eine weitgehend aus Wasserstoff und Stickstoff bestehende, Reste nicht auskondensierten Ammoniaks enthaltende Gasphase (19) erhältlich sind, wobei der Abscheider (D) so mit dem Ammoniakreaktor (R) verbunden ist, dass die Gasphase (19) als Recyclegas (2) zum Ammoniakreaktor (R) zurückgeführt und dabei mit dem aus Wasserstoff und Stickstoff bestehenden Make-up-Gas (1) zum Ammoniaksynthesegas (5) gemischt werden kann.

15. Vorrichtung nach einem der Ansprüche 9 bis 14, **dadurch gekennzeichnet, dass** sie eine Einrichtung zur Erzeugung vom Wasserstoff und Stickstoff zur Bereitstellung des Ammoniaksynthesegases (5) umfasst, in der Wasserstoff und/oder Stickstoff unter Einsatz von Strom erzeugbar sind, der direkt aus regenerativen Quellen wie Wind- oder Solarkraftwerken, oder als Überschussstrom aus dem öffentlichen Netz bezogen wird.

## Claims

1. A process for the synthesis of ammonia (18), in which a gas mixture (make-up gas) (1) comprising hydrogen and nitrogen is provided in a first operating mode with a flow rate that is above a threshold value and in a second operating mode with a flow rate that is below this threshold value in order to form an ammonia synthesis gas (5) which is reacted in an ammonia reactor (R) in at least one first catalyst bed (K1) and in a second catalyst bed (K2), connected to the first catalyst bed, to form a synthesis product (16) containing ammonia, wherein in a cooling device (E3) arranged between the first catalyst bed (K1) and the second catalyst bed (K2), non-reacted ammonia synthesis gas (8) is used as a cooling agent in order to reduce the temperature of an ammonia synthesis gas (12) partially reacted in the first catalyst bed (K1) before it is forwarded to the second catalyst bed (K2), wherein in the second operating mode, the higher the flow rate of the provided make-up gas (1), the greater the reduction in temperature of the partially reacted ammonia synthesis gas (12), **characterized in that** the cooling of the ammonia synthesis gas (12) partially reacted in the first catalyst bed (K1) is carried out in indirect heat exchange against provided ammonia synthesis gas (8).

2. The process according to claim 1, **characterized in that** the provided ammonia synthesis gas (5) is reacted into the synthesis product (16) in the ammonia reactor (R) in more than two catalyst beds (K1, K2, K3) passed through in series, wherein a cooling device (E2, E3) is arranged between each two immediately adjacent catalyst beds, in which provided ammonia synthesis gas (7, 8) serves as a cooling agent in order to cool the ammonia synthesis gas (12, 14) partially reacted in one catalyst bed in indirect heat exchange before it is forwarded to the following catalyst bed.

3. The process according to any of the claims 1 or 2, **characterized in that** at least a part of the provided ammonia synthesis gas (5) is fed to the first catalyst bed (K1) in the second operating mode in the bypass (22, 23) to the cooling device(s) (E2, E3).

4. The process according to claim 3, **characterized in that** at least a partial flow (21) of the provided ammonia synthesis gas (5) is heated (E10) against the synthesis product (16).

5. The process according to claim 4, **characterized in that** the ratio of the part of the ammonia synthesis gas (5) used as cooling agent (7, 8) in the cooling device(s) (E2, E3) to the part led via bypass (22, 23) around the cooling device(s) (E2, E3) is changed depending on the amount of provided make-up gas (1), wherein the less make-up gas (1) is provided, the smaller said ratio is.

6. The process according to any of the claims 1 to 5, **characterized in that** the synthesis product (16) is withdrawn from the ammonia reactor (R) and cooled in several cooling stages (E4, E5, E1, E7, E8, E9) in order to condense out ammonia and produce a two-phase mixture of substances (17) which is separated in a separator (D) into a liquid phase (18) consisting predominantly of ammonia and a gas phase (19) consisting largely of hydrogen and nitrogen and containing residues of ammonia that has not been condensed out, wherein the gas phase (19) is returned to the ammonia reactor (R) as recycle gas (2) and is mixed with the make-up gas (1) consisting of hydrogen and nitrogen to form the ammonia synthesis gas (5).

7. The process according to claim 6, **characterized in that** in the second operating mode, a partial flow (22) of the synthesis product (16) is separated upstream of at least one of the plurality of cooling stages (E4, E5, E1, E7, E8, E9) and is fed into the separator (D) without further cooling.

8. The process according to any of the claims 1 to 7, **characterized in that** hydrogen and/or nitrogen required for the provision of the make-up gas (1) is generated using electricity that is obtained directly from renewable sources such as wind or solar power plants, or as surplus electricity from the public grid.

9. An apparatus for the synthesis of ammonia (18), comprising a device with which a make-up gas (1) can be provided for forming an ammonia synthesis gas (5), an ammonia reactor (R) in which at least a first catalyst bed (K1) and a second catalyst bed (K2) connected to the first via a cooling device (E3) are arranged, via which the provided ammonia synthesis gas (5) can be reacted to form a synthesis product (16) containing ammonia, a feed device via which ammonia synthesis gas (5) can be fed to the first catalyst bed (K1) as feed (9) and to the cooling device (3) as a cooling agent in order to lower the temperature of the ammonia synthesis gas (12) partially reacted in the first catalyst bed (K1) before it is forwarded to the second catalyst bed (K2), and a control device via which the extent of the temperature reduction can be adjusted depending on the provided amount of make-up gas (1), **characterized in that** the cooling device (E3) is designed as a heat exchanger in which ammonia synthesis gas (8) used as cooling agent can be warmed up in indirect heat exchange against partially reacted ammonia synthesis gas (12) before being fed in the first catalyst bed (K1).

10. The apparatus according to claim 9, **characterized in that** the ammonia reactor (R) is designed with more than two, preferably with three catalyst beds (K1, K2, K3), each of which is serially connected to each other via a cooling device (E2, E3).

11. The apparatus according to any of claims 9 or 10, **characterized in that** the apparatus has a line (22, 23) via which at least a part of the provided ammonia synthesis gas (5) can be supplied to the first catalyst bed (K1) in a bypass to the cooling device(s) (E2, E3) arranged between the catalyst beds (K1, K2, K3), wherein the size of the bypass flow can be adjusted via the control device.

12. The apparatus according to claim 11, **characterized in that** a cooling device (E10) is arranged downstream of the last catalyst bed (K3) in the flow direction, with which at least the partial flow of the provided ammonia synthesis gas (5) guided in the bypass can be heated against the synthesis product (16) to be cooled in indirect heat exchange.

13. The apparatus according to claim 12, **characterized in that** the cooling device (E10) arranged downstream of the catalyst bed (K3) arranged last in the flow direction is located within the jacket of the ammonia reactor (R).

14. The apparatus according to any of claims 9 to 13, **characterized in that** downstream of the ammonia reactor (R) a plurality of cooling devices (E4, E5, E1, E7, E8, E9) and a separator (D) are arranged in series, by means of which ammonia can be condensed out and separated from the synthesis product (16) containing hydrogen and nitrogen components in addition to ammonia and by means of which a liquid phase (18) consisting predominantly of ammonia and a gas phase (19) consisting largely of hydrogen and nitrogen and containing residues of ammonia that has not been condensed out can be obtained, wherein the separator (D) is connected to the ammonia reactor (R) in such a way that the gas phase (19) can be returned to the ammonia reactor (R) as recycle gas (2) and can be mixed with the make-up gas (1) consisting of hydrogen and nitrogen to form the ammonia synthesis gas (5).

15. The apparatus according to any of claims 9 to 14, **characterized in that** the apparatus comprises a device for generating hydrogen and nitrogen for providing the ammonia synthesis gas (5), in which device hydrogen and/or nitrogen can be generated using electricity that is obtained directly from renewable sources such as wind or solar power plants, or as surplus electricity from the public grid.

## Revendications

1. Procédé pour la synthèse d'ammoniac (18), dans lequel un mélange gazeux (gaz d'appoint) (1) comprenant de l'hydrogène et de l'azote est fourni avec un flux massique supérieur à une valeur seuil dans un premier mode de fonctionnement et avec un flux massique inférieur à ladite valeur seuil dans un second mode de fonctionnement, afin de former un gaz de synthèse d'ammoniac (5) qui est transformé, dans un réacteur à ammoniac (R) dans au moins un premier (K1) et un deuxième lit catalytique (K2) relié au premier, en un produit de synthèse (16) contenant de l'ammoniac, dans lequel du gaz de synthèse d'ammoniac (8) n'ayant pas été transformé est utilisé comme agent de refroidissement dans un appareil de refroidissement (E3) disposé entre le premier (K1) et le deuxième lit catalytique (K2), afin d'abaisser la température d'un gaz de synthèse d'ammoniac (12) ayant été partiellement transformé dans le premier lit catalytique (K1) avant son transfert dans le deuxième lit catalytique (K2), dans lequel, plus le flux massique du gaz d'appoint (1) fourni est important, plus la température du gaz de synthèse d'ammoniac (12) ayant été partiellement transformé est abaissée dans le second mode de fonctionnement, **caractérisé en ce que** le refroidissement du gaz de synthèse d'ammoniac (12) ayant été partiellement transformé dans le premier lit catalytique (K1) est réalisé dans un échange de chaleur indirect contre du gaz de synthèse d'ammoniac (8) fourni.

2. Procédé selon la revendication 1, **caractérisé en ce que** le gaz de synthèse d'ammoniac (5) fourni est transformé en produit de synthèse (16) dans le réacteur à ammoniac (R) dans plus de deux lits catalytiques (K1, K2, K3) traversés en série, dans lequel un appareil de refroidissement (E2, E3) est disposé entre respectivement deux lits catalytiques immédiatement adjacents, dans lequel appareil de refroidissement du gaz de synthèse d'ammoniac (7, 8) fourni sert d'agent de refroidissement afin de refroidir dans un échange de chaleur indirect le gaz de synthèse d'ammoniac (12, 14) partiellement transformé dans un lit catalytique avant son transfert dans le lit catalytique suivant.

3. Procédé selon l'une des revendications 1 ou 2, **caractérisé en ce qu'au** moins une partie du gaz de synthèse d'ammoniac (5) fourni est amenée dans la dérivation (22, 23) vers le ou les appareils de refroidissement (E2, E3) du premier lit catalytique (K1) dans le second mode de fonctionnement.

4. Procédé selon la revendication 3, **caractérisé en ce qu'au** moins un flux partiel (21) du gaz de synthèse d'ammoniac (5) fourni est chauffé (E10) contre le produit de synthèse (16).

5. Procédé selon la revendication 4, **caractérisé en ce que,** en fonction de la quantité de gaz d'appoint (1) fourni, le rapport entre la partie du gaz de synthèse d'ammoniac (5) fourni utilisée comme agent de refroidissement (7, 8) dans le ou les appareils de refroidissement (E2, E3) et la partie du gaz de synthèse d'ammoniac guidée dans la dérivation (22, 23) vers le ou les appareils de refroidissement (E2, E3) est modifié, dans lequel ledit rapport est d'autant plus petit que la quantité de gaz d'appoint (1) fourni est faible.

6. Procédé selon l'une des revendications 1 à 5, **caractérisé en ce que** le produit de synthèse (16) est soutiré du réacteur à ammoniac (R) et refroidi dans plusieurs étapes de refroidissement (E4, E5, E1, E7, E8, E9) afin de condenser l'ammoniac et de produire un mélange de substances à deux phases (17) qui est séparé dans un séparateur (D) en une phase liquide (18) constituée principalement d'ammoniac et en une phase gazeuse (19) constituée en grande partie d'hydrogène et d'azote et contenant des restes d'ammoniac non condensé, dans lequel la phase gazeuse (19) est renvoyée en tant que gaz de recyclage (2) au réacteur à ammoniac (R) et est alors mélangée avec le gaz d'appoint (1) constitué d'hydrogène et d'azote pour former le gaz de synthèse d'ammoniac (5).

7. Procédé selon la revendication 6, **caractérisé en ce que,** dans le second mode de fonctionnement, un flux partiel (22) du produit de synthèse (16) est séparé en amont d'au moins l'une des étapes de refroidissement (E4, E5, E1, E7, E8, E9) et est guidé sans refroidissement supplémentaire dans le séparateur (D).

8. Procédé selon l'une des revendications 1 à 7, **caractérisé en ce que** l'hydrogène et/ou l'azote nécessaires pour la fourniture du gaz d'appoint (1) sont produits en utilisant de l'électricité qui est obtenue directement à partir de sources renouvelables telles que des centrales éoliennes ou solaires, ou en tant qu'électricité excédentaire provenant du réseau public.

9. Dispositif pour la synthèse d'ammoniac (18), comprenant un appareil avec lequel un gaz d'appoint (1) peut être fourni pour former un gaz de synthèse d'ammoniac (5), un réacteur à ammoniac (R) dans lequel sont disposés au moins un premier lit catalytique (K1) et un deuxième lit catalytique (K2) relié au premier par l'intermédiaire d'un appareil de refroidissement (E3), par l'intermédiaire desquels lits catalytiques du gaz de synthèse d'ammoniac (5) fourni peut être transformé en un produit de synthèse (16) contenant de l'ammoniac, un appareil d'amenée par l'intermédiaire duquel du gaz de synthèse d'ammoniac (5) peut être amené au premier lit catalytique (K1) en tant que charge (9) ainsi qu'à l'appareil de refroidissement (3) en tant qu'agent de refroidissement, afin d'abaisser la température du gaz de synthèse d'ammoniac (12) ayant été partiellement transformé dans le premier lit catalytique (K1) avant son transfert dans le deuxième lit catalytique (K2), ainsi qu'un appareil de régulation par l'intermédiaire duquel l'importance de l'abaissement de la température peut être réglée en fonction de la quantité de gaz d'appoint (1) fournie, **caractérisé en ce que** l'appareil de refroidissement (E3) est réalisé en tant qu'échangeur de chaleur dans lequel le gaz de synthèse d'ammoniac (8) utilisé comme agent de refroidissement peut être réchauffé avant son utilisation dans le premier lit catalytique (K1) dans un échange de chaleur indirect contre du gaz de synthèse d'ammoniac (12) ayant été partiellement transformé.

10. Dispositif selon la revendication 9, **caractérisé en ce que** le réacteur à ammoniac (R) est réalisé avec plus de deux, de préférence avec trois lits catalytiques (K1, K2, K3), qui sont reliés en série les uns aux autres respectivement par l'intermédiaire d'un appareil de refroidissement (E2, E3).

11. Dispositif selon l'une des revendications 9 ou 10, **caractérisé en ce qu'il** présente une conduite (22, 23) par l'intermédiaire de laquelle au moins une partie du gaz de synthèse d'ammoniac (5) fourni peut être amenée au premier lit catalytique (K1) dans la dérivation vers le ou les appareils de refroidissement (E2, E3) disposés entre les lits catalytiques (K1, K2, K3), dans lequel l'importance du flux de dérivation peut être réglée par l'intermédiaire de l'appareil de régulation.

12. Dispositif selon la revendication 11, **caractérisé en ce qu'un** appareil de refroidissement (E10) est disposé en aval du dernier lit catalytique (K3) dans le sens d'écoulement, avec lequel appareil de refroidissement au moins le flux partiel du gaz de synthèse d'ammoniac (5) fourni à conduire dans la dérivation peut être réchauffé dans un échange de chaleur indirect contre le produit de synthèse (16) à refroidir.

13. Dispositif selon la revendication 12, **caractérisé en ce que** l'appareil de refroidissement (E10) disposé en aval du dernier lit catalytique (K3) dans le sens d'écoulement se trouve à l'intérieur de l'enveloppe du réacteur à ammoniac (R).

14. Dispositif selon l'une des revendications 9 à 13, **caractérisé en ce qu'en** aval du réacteur à ammoniac (R) sont disposés en série plusieurs appareils de refroidissement (E4, E5, E1, E7, E8, E9) ainsi qu'un séparateur (D), par l'intermédiaire desquels l'ammoniac peut être condensé à partir du produit de synthèse (16) contenant, outre de l'ammoniac, également des fractions d'hydrogène et d'azote, et séparé de celui-ci, et une phase liquide (18) constituée principalement d'ammoniac et une phase gazeuse (19) constituée en grande partie d'hydrogène et d'azote et contenant des restes d'ammoniac non condensé peuvent être obtenues, dans lequel le séparateur (D) est relié au réacteur à ammoniac (R) de sorte que la phase gazeuse (19) peut être renvoyée au réacteur à ammoniac (R) en tant que gaz de recyclage (2) et être mélangée au gaz d'appoint (1) constitué d'hydrogène et d'azote pour former le gaz de synthèse d'ammoniac (5).

15. Dispositif selon l'une des revendications 9 à 14, **caractérisé en ce qu'il** comprend un appareil pour la production d'hydrogène et d'azote pour la fourniture du gaz de synthèse d'ammoniac (5), dans lequel appareil de l'hydrogène et/ou de l'azote peuvent être produits en utilisant de l'électricité qui est obtenue directement à partir de sources renouvelables telles que des centrales éoliennes ou solaires, ou en tant qu'électricité excédentaire provenant du réseau public.
